# EUROPEAN PATENT APPLICATION

(11) **EP 3 550 458 A1**
(43) Date of publication of application: **09.10.2019**
(21) Application number: 18165957.4
(22) Date of filing: 05.04.2018
(51) Int. Cl.: G06F 21/31, G06F 21/32, G06F 21/33, G06F 21/34, G06F 21/35, G06Q 20/32, H04L 29/06

(54) **ELECTRONIC DEVICES AND METHODS FOR IDENTIFYING AND/OR AUTHENTICATING A USER**

(71) Applicant: Keyp GmbH, 80799 München (DE)
(72) Inventor: Berroth, Jonathan, 10437 Berlin (DE); Mang, Simon, 80636 München (DE)
(74) Representative: Patentship Patentanwaltsgesellschaft mbH

(57) **Abstract**

The invention relates to an electronic wallet device (101) for user identification and/or authentication, wherein the electronic wallet device (101) comprises; a communication interface (103) being configured to receive an identification flow from a remote server device (131), the identification flow indicating a number of identification features associated with remote identification entities being capable of identifying and/or authenticating the identification features, and an identification order in which the identification features are to be identified and/or authenticated by the remote identification entities; and a processor (105) being configured to retrieve the identification flow and to provide identification features for identification according to the identification flow; wherein the communication interface (103) is configured to send the identification features towards the remote identification entities for identification and/or authentication according to the identification order and to receive signed identification features that are signed by the remote identification entities using a respective private key of the remote identification entities.

## Description

### TECHNICAL FIELD

In general, the present invention relates to the field of user identification. More specifically, the present invention relates to electronic devices and methods for identifying and/or authenticating a user.

### BACKGROUND

In the new era of digitalization, service providers continually endeavour to deliver value and convenience to users (customer, employee as well as objects and machines) by, for example, providing compelling services that offer useful, efficient and appealing features, and an enhanced user experience.

However, the service providers are usually unable to track and know their digital users, as they do not have up-to-date verified digital identities. Furthermore, users usually have many accounts and throughout the lowest form of security: a password.

This leads to a structural problem: the service providers spend more and more money on protecting and updating their databases and the user accounts become more and more inconvenient (e.g. two-factor-authentication).

Moreover, it is also annoying and costly for the users to verify or update their identification data constantly by being requested from the same service provider or different service providers.

In light of the above, there is a need for improved electronic devices as well as corresponding methods for identifying and/or authenticating a user, allowing tamper-proofing of user identification data and improving cost-efficiency of user identification and/or authentication.

### SUMMARY

It is an object of the invention to provide improved electronic devices and corresponding methods for identifying and/or authenticating a user, allowing tamper-proofing of user identification data and improving cost-efficiency of user identification and/or authentication.

The foregoing and other objects are achieved by the subject matter of the independent claims. Further implementation forms are apparent from the dependent claims, the description and the figures.

Generally, the present invention relates to an electronic wallet device and an electronic server device as well as corresponding methods for user identification and/or authentication, allowing tamper-proofing of user identification data and cost-efficiency of user identification and/or authentication. More specifically, embodiments of the present invention can receive verified identity data from the users which are verified by third-party-authenticators and authenticate or register users through highly secure multi-factor identity verification.

According to the embodiments, the identity attributes of users, i.e. the identification features, will be proved by different authentication providers and in this way become "identity factors", i.e. verified identification features. The identity factors are decentrally stored on the user's device (cryptographic badges). For each login the required identity factors are transmitted to a service provider for authentication.

More specifically, according to a first aspect the invention relates to an electronic wallet device for user identification and/or authentication, wherein the electronic wallet device comprises: a communication interface being configured to receive an identification flow from a remote server device, the identification flow indicating a number of identification features associated with remote identification entities being capable of identifying and/or authenticating the identification features, and an identification order in which the identification features are to be identified and/or authenticated by the remote identification entities; a processor being configured to retrieve the identification flow and to provide identification features for identification and/or authentication according to the identification flow; wherein the communication interface is configured to send the identification features towards the remote identification entities for identification and/or authentication according to the identification order and to receive signed identification features that are signed by the remote identification entities using a respective private key of the remote identification entities.

Thus, an improved electronic wallet device for user identification and/or authentication is provided, allowing tamper-proofing of user identification data and improving cost-efficiency of user identification and/or authentication.

In a further possible implementation form of the first aspect, the electronic wallet comprises a memory configured to store the signed identification features that are signed by the remote identification entities.

In a further possible implementation form of the first aspect, the identification flow comprising a plurality of identification orders, in each of which a respective subset of the identification features are to be identified and/or authenticated by respective remote identification entities, the processor is configured to calculate a respective cost for identifying and/or authenticating the respective subset of the identification features by the remote identification entities according to each of the plurality of identification orders on the basis of signed identification features stored in the memory, and to determine the identification order by selecting the identification order which comprises the lowest cost from the plurality of identification orders.

In a further possible implementation form of the first aspect, the processor is further configured to determine the respective cost for identifying and/or authenticating the respective subset of the identification features according to each of the plurality of identification orders on the basis of: the signed identification features stored in the memory; a cost associated with the use of the respective subset of the identification features by the remote server device; and/or a rule associated with identification and/or authentication of the respective subset of the identification features by the remote server device.

In a further possible implementation form of the first aspect, the communication interface is configured to capture and send the identification features that are not stored in the memory towards the remote identification entities for identification and/or authentication according to the identification order and to receive signed identification features that are signed by the remote identification entities using respective private keys of the remote identification entities.

In a further possible implementation form of the first aspect, the communication interface is configured to transmit the signed identification features to the remote server device, wherein the signed identification features have been signed by the remote identification entities according to the identification order.

In a further possible implementation form of the first aspect, the communication interface is configured to receive public keys associated with the respective private keys of the respective remote identification entities from the respective remote identification entities in order to verify the signed identification features, and the processor is configured to verify the signed identification features on the basis of the public keys associated with the respective private keys of the respective remote identification entities.

In a further possible implementation form of the first aspect, the electronic wallet device comprises a graphical user interface configured to display a number of requests associated with the identification features according to the identification order to a user and to receive the identification features from the user in response to the respective request.

In a further possible implementation form of the first aspect, the identification features comprise an email identification, a GPS location identification, a fingerprint identification, an address identification, a facial character identification, a phone number identification, a license identification, and/or a membership identification.

According to a second aspect the invention relates to a method for user identification and/or authentication, wherein the method comprises: receiving an identification flow, the identification flow indicating a number of identification features associated with remote identification entities being capable of identifying and/or authenticating the identification features, and an identification order in which the identification features are to be identified and/or authenticated by the remote identification entities; retrieving the identification flow and providing identification features for identification and/or authentication according to the identification flow; sending the identification features towards the remote identification entities for identification and/or authentication according to the identification order; and receiving signed identification features that are signed by the remote identification entities using a respective private key of the remote identification entities.

Thus, an improved method for user identification is provided, allowing tamper-proofing of user identification data and improving cost-efficiency of user identification and/or authentication.

According to a third aspect the invention relates to an electronic server device for requesting user identification and/or authentication, wherein the electronic server device comprises: a processor configured to generate an identification flow, the identification flow indicating a number of identification features associated with remote identification entities being capable of identifying and/or authenticating the identification features, and an identification order in which the identification features are to be identified by the remote identification entities; and a communication interface configured to transmit the identification flow and the identification order to an electronic wallet device, and to receive identification features that are signed by the remote identification entities using a respective private key of the remote identification entities from the electronic wallet device.

Thus, an improved electronic server device is provided, allowing tamper-proofing of user identification data and improving cost-efficiency of user identification and/or authentication.

In a further possible implementation form of the third aspect, the processor is configured to generate the identification flow by generating a plurality of identification orders, in each of which a respective subset of the identification features are to be identified and/or authenticated by respective remote identification entities.

In a further possible implementation form of the third aspect, the electronic server device comprises a graphical user interface configured to display the identification flow and the plurality of identification orders, in each of which a respective subset of the identification features are to be identified and/or authenticated by respective remote identification entities.

In a further possible implementation form of the third aspect, the communication interface is configured to receive public keys associated with the respective private keys of the respective remote identification entities from the respective remote identification entities, and the processor is configured to verify the signed identification features received from the electronic wallet device using the public keys received from the respective remote identification entities.

According to a fourth aspect the invention relates to a method for requesting user identification and/or authentication, the method comprising: generating an identification flow, the identification flow indicating a number of identification features associated with remote identification entities being capable of identifying and/or authenticating the identification features, and an identification order in which the identification features are to be identified and/or authenticated by the remote identification entities; transmitting the identification flow and the identification order to an electronic wallet device; receiving identification features that are signed by the remote identification entities using a respective private key of the remote identification entities from the electronic wallet device.

In a further possible implementation form of the fourth aspect, the method further comprises: receiving public keys associated with the respective private keys of the respective remote identification entities from the respective remote identification entities; and verifying the signed identification features received from the electronic wallet device using the public keys received from the respective remote identification entities.

Thus, an improved method for requesting user identification and/or authentication is provided, allowing tamper-proofing of user identification data and improving cost-efficiency of user identification and/or authentication.

According to a fifth aspect the invention relates to an electronic user identification and/or authentication system which comprises: an electronic wallet device according to the first aspect; an electronic server device according to the third aspect; and remote identification entities configured to identify and/or authenticate identification features received from the electronic wallet device and to sign the identification features using a respective private key.

Thus, an improved system for user identification and/or authentication is provided, allowing tamper-proofing of user identification data and improving cost-efficiency of user identification and/or authentication.

According to a sixth aspect the invention relates to a computer program comprising program code for performing the method of the second aspect or the method of the fourth when executed on a computer.

The invention can be implemented in hardware and/or software.

### BRIEF DESCRIPTION OF THE DRAWINGS

Further embodiments of the invention will be described with respect to the following figures, wherein:
Figure 1 shows a schematic diagram of an electronic wallet device and an electronic server device according to an embodiment;
Figure 2 shows a schematic diagram illustrating an exemplary procedure of identifying and/or authenticating a user according to an embodiment;
Figure 3 shows a schematic diagram of an exemplary identification flow generated by an electronic server device according to an embodiment;
Figure 4 shows a subset (i.e. an authentication path) of the identification features within a schematic diagram of an exemplary identification flow generated by an electronic server device according to an embodiment;
Figure 5 shows a schematic diagram illustrating creation of an identification flow by an electronic server device according to an embodiment;
Figure 6 shows a schematic diagram illustrating evaluation of an identification flow by an electronic wallet device according to an embodiment;
Figure 7 shows a schematic diagram illustrating a first variant in which an identification-flow identification factor challenge can be inserted in a parent identification flow by an electronic server device according to an embodiment;
Figure 8 shows a schematic diagram illustrating a second variant in which an identification-flow identification factor challenge can be inserted in a parent identification flow by an electronic server device according to an embodiment;
Figure 9 shows a schematic diagram illustrating a number of identification factors of an equivalence class generated by an electronic server device according to an embodiment;
Figure 10 shows a schematic diagram illustrating an exemplary procedure of identifying and/or authenticating a user by an electronic user identification and/or authentication system according to an embodiment;
Figure 11 shows a schematic diagram illustrating a method for user identification and/or authentication according to an embodiment; and
Figure 12 shows a schematic diagram illustrating a method for requesting user identification and/or authentication according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

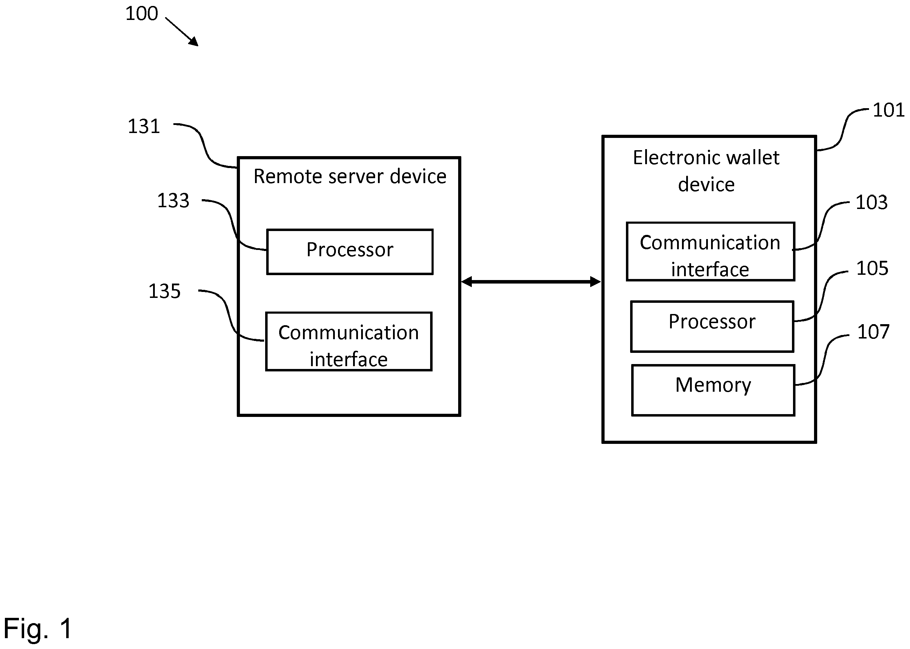

As will be described in more detail in the following, embodiments of the invention relate to an electronic user identification and/or authentication system comprising an electronic wallet device 101, a remote server device 131 as shown in figure 1 and remote identification entities (not shown in figure 1). In an exemplary embodiment, the electronic wallet device 101 can be a smart phone; the electronic server device 131 (also referred to as service providers) can provide digital services which are available to users after a registration or a log-in, and the remote identification entities can provide processes or methods for verifying / identifying user data or authenticating users.

As illustrated in figure 1, the electronic wallet device 101 comprises: a communication interface 103 being configured to receive an identification flow from the remote server device 131, the identification flow indicating a number of identification features associated with remote identification entities being capable of identifying and/or authenticating the identification features, and an identification order in which the identification features are to be identified and/or authenticated by the remote identification entities; a processor 105 being configured to retrieve the identification flow and to provide identification features for identification and/or authentication according to the identification flow; wherein the communication interface 103 is configured to send the identification features towards the remote identification entities for identification and/or authentication according to the identification order and to receive signed identification features that are signed by the remote identification entities using a respective private key of the remote identification entities.

As can be taken from figure 1, the electronic wallet device 101 further comprises a memory 107 configured to store the signed identification features that are signed by the remote identification entities. In an embodiment, the memory 107 is a secure memory which is tamper-proof. In a further embodiment, the electronic wallet device 101 further comprises a graphical user interface configured to display a number of requests associated with the identification features according to the identification order to a user and to receive the identification features from the user in response to the respective request.

The electronic server device 131 shown in figure 1 is provided for requesting user identification and/or authentication, wherein the electronic server device 131 comprises: a processor 133 configured to generate an identification flow, the identification flow indicating a number of identification features associated with remote identification entities being capable of identifying and/or authenticating the identification features, and an identification order in which the identification features are to be identified and/or authenticated by the remote identification entities; and a communication interface 135 configured to transmit the identification flow and the identification order to an electronic wallet device 101, and to receive identification features that are signed by the remote identification entities using a respective private key of the remote identification entities from the electronic wallet device 101.

Furthermore, the processor 133 of the electronic server device 131 is configured to generate the identification flow by generating a plurality of identification orders, in each of which a respective subset of the identification features are to be identified and/or authenticated by respective remote identification entities.

In an embodiment, the processor 105 of the electronic wallet device 101 is configured to calculate a respective cost for identifying and/or authenticating the respective subset of the identification features by the remote identification entities according to each of the plurality of identification orders on the basis of signed identification features stored in the memory 107, and to determine the identification order by selecting the identification order which comprises the lowest cost from the plurality of identification orders.

In a further embodiment, the processor 105 of the electronic wallet device 101 is further configured to determine the respective cost for identifying and/or authenticating the respective subset of the identification features according to each of the plurality of identification orders on the basis of: the signed identification features stored in the memory 107; a cost associated with the use of the respective subset of the identification features by the remote server device 131; and/or a rule associated with identification and/or authentication of the respective subset of the identification features by the remote server device 131.

In an embodiment, the communication interface 103 of the electronic wallet device 101 is configured to send the identification features that are not stored in the memory 107 towards the remote identification entities for identification and/or authentication according to the identification order and to receive signed identification features that are signed by the remote identification entities using respective private keys of the remote identification entities.

In an embodiment, the communication interface 103 of the electronic wallet device 101 is further configured to transmit the signed identification features to the remote server device 131, wherein the signed identification features have been signed by the remote identification entities according to the identification order.

In an embodiment, the communication interface 103 of the electronic wallet device 101 is configured to receive public keys associated with the respective private keys of the respective remote identification entities from the respective remote identification entities in order to verify the signed identification features, and the processor 105 of the electronic wallet device 101 is configured to verify the signed identification features on the basis of the public keys associated with the respective private keys of the respective remote identification entities.

Similarly, the communication interface 135 of the electronic server device 131 is also configured to receive public keys associated with the respective private keys of the respective remote identification entities from the respective remote identification entities, and the processor 133 of the electronic server device 131 is configured to verify the signed identification features received from the electronic wallet device 101 using the public keys received from the respective remote identification entities.

According to an embodiment, a signed identification feature (also referred to as identification factor) comprises a verified data set or an activated authentication method while an identification factor "challenge" comprises a request from a service provider (i.e. electronic server device 131) for a user to prove or show a certain identification factor. It is worth noting that an identity provider (i.e. an identification entity) can verify or identify or authenticate a particular identification factor.

According to an embodiment, the identification features comprise an email identification, a GPS location identification, a fingerprint identification, an address identification, a facial character identification, a phone number identification, a license identification, a membership identification, an age identification, a company registry identification, a password identification, an OTP identification, a Geo fence identification, a machine certificate identification, a payment method identification, a voice identification, a photo identification, a SME employee card identification, a signature identification, a signature swipe identification, a registered eDelivery identification, an IAM card identification, an IBAN identification, a Schufa person identification, a creditreform company identification, a credit score identification, an ID card GwG videoident identification, a ID card Telco identification, a ID card automatic identification, a Send-Notification identification, a SelfID identification, a f2f identification, a Ident identification, an eSign identification, a vatlayer identification, a streetlayer identification, a numverify identification, a mailboxlayer identification, a continuous authentication identification, an SMS OTP identification, a voice OTP identification, a driving license OCR identification, an identity card OCR identification, a passport OCR identification, a residence permit OCR identification, a travel document OCR identification, a Visa OCR identification, an identity video identification, an identity eSign identification, an identity eID identification, an identitiy Giro identification, an identity Courier identification, an identity shop identification, an identity Legal identification, a risk-adaptive Bio Auth identification, a behavior-based identification, an VAT identification, an interaction identification, a Continuous Authentication identification, a certificate-of-registration identification, a master data identification, an identification of list of shareholders, a commercial owner identification, a micro balance identification, a complete balance identification, a SCHUFA credit traffic light identification, and/or a SCHUFA complete credit scoring identification.

According to an embodiment, the electronic server device 131 (also referred to as service providers) can provide digital services which are available to users after a registration or a log-in and remote identification entities (also referred to as identity providers) can provide processes or methods for verifying or/and identify user data or authenticating users (i.e. displaying identification features).

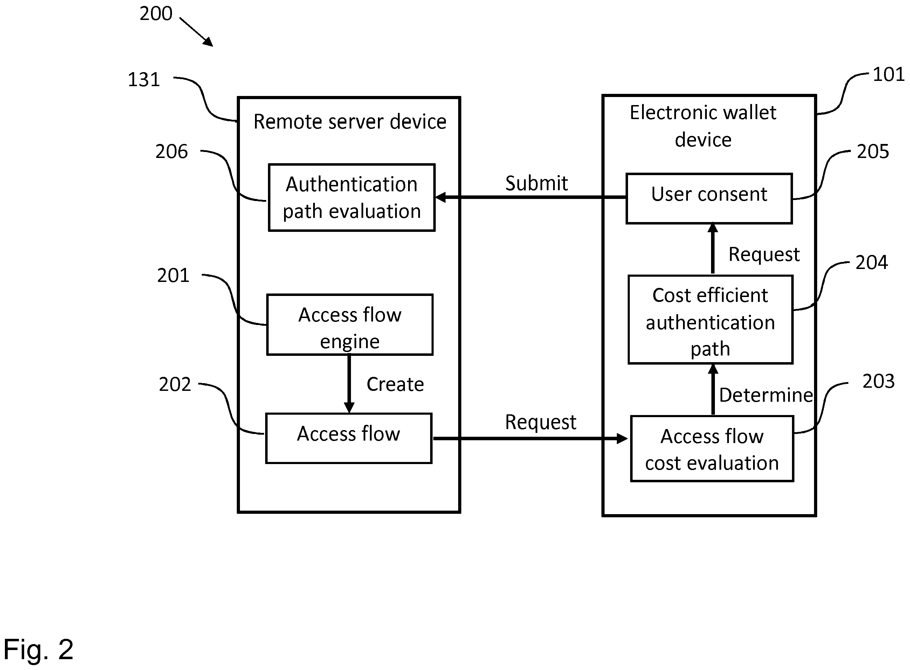

Figure 2 shows a schematic diagram illustrating an exemplary procedure 200 of identifying and/or authenticating a user according to an embodiment, wherein the user can be a person, an object or a machine.

In step 201, an identification flow (hereafter also referred to as access flow) can be created by the electronic server device 131 via an access flow engine, for instance, by an interface via drag and drop.

In step 202, an access flow is created, wherein the access flow comprises a mathematical graph comprising identification factors as nodes and costs of verifying the identification factors as edge weights and the access flow comprises information or rules about how users can authenticate to the electronic server device 131. The access flow is transmitted to the electronic wallet device 101 from the electronic server device 131.

In steps 203 and 204, the electronic wallet device 101 determines an optimal (e.g. most cost-effective) authentication process (a set for identification factors) orders on the basis of identification factors (i.e. signed identification features) already stored in the electronic wallet device 101 and the information or rules about how users can authenticate to the electronic server device 131.

In step 205, the identification factors for authentication are approved by the user and transmitted to the electronic server device 131.

In step 206, the electronic server device 131 checks and inspects if the transmitted identification factors correspond to an allowed authentication process according to the access flow.

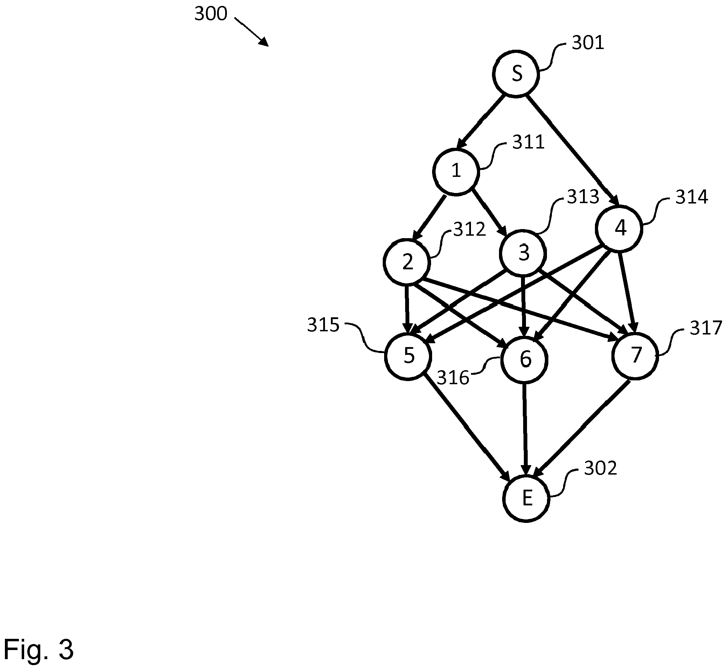

Figure 3 shows a schematic diagram of an exemplary identification flow 300, i.e. an access flow generated by an electronic server device 131 according to an embodiment, wherein the identification flow 300 is a directed, weighted, acyclic and coherent graph and comprises a plurality of nodes, including Start (S) 301, End (E) 302 and a number of identification features 311-317, i.e. identification factor challenges.

The node Start (S) is a source and comprises an input degree of 0 while the node End (E) is a sink and comprises an output degree of 0. For other nodes, e.g. identification features, each of them comprises an input degree larger than 0 and an output degree larger 0

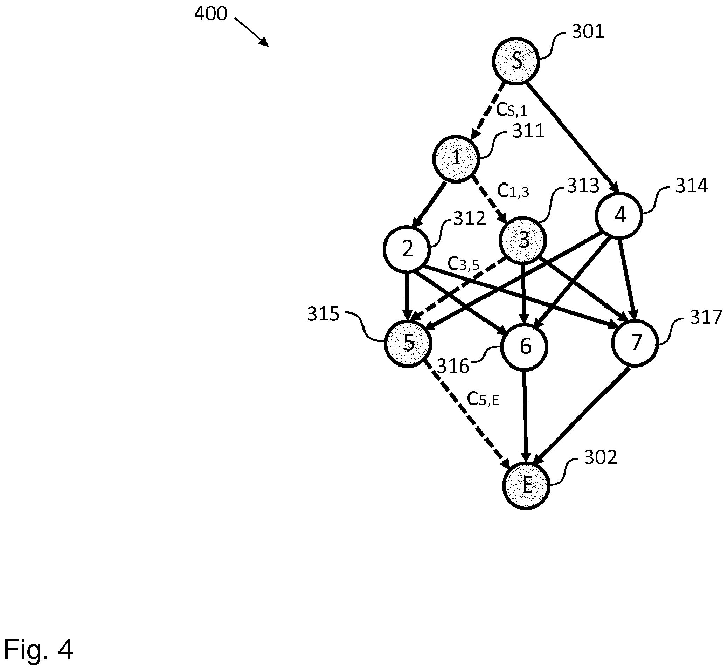

Figure 4 shows a schematic diagram of an exemplary identification flow 400, i.e. an access flow generated by an electronic server device 131 according to an embodiment, wherein the identification flow 400 comprises a plurality of nodes, including Start (S) 301, End (E) 302 and a number of identification features 311-317, i.e. identification factor challenges.

As can be seen from figure 4, the identification flow 400 comprises a plurality of identification orders (hereafter also referred to as paths), each path from node S 301 to node E 302 indicating a number of identification features 311-317 (i.e. identification factor challenges) will be identified and verified as an allowed authentication. The path is applicable and the authentication can be made if the user can prove all identification factor challenge of the path.

In an embodiment, the edge from an identification factor challenge A (IDF_A) to an identification factor challenge B (IDF_B) is a function of calculating cost according to which the user needs to prove or identify the IDF_B after IDF_A. In the function of calculating cost, the following aspects can be taken into account: if the IDF_B is already stored in the wallet device 101; a cost associated with use of the IDF_B by the remote server device 131; data values of the identification factor challenges of the selected path from the node S 301 to the node IDF_A; and a preference or rule associated with identification of the user by the remote server device 131.

The cost of a possible authentication comprises the sum of edge weights of the respective path and the cost value can be 0 to unlimited. An edge weight of an unlimited value enables the associated path not to be required or to be technically impossible to define.

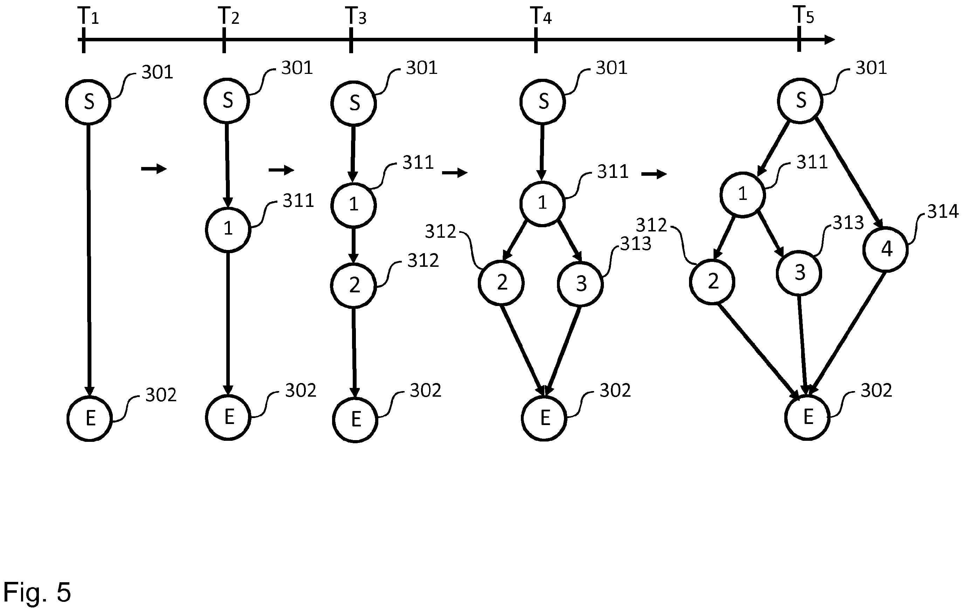

Figure 5 shows a schematic diagram illustrating creation of an identification flow, i.e. an access flow, by an electronic server device 131 according to an embodiment, wherein the identification flow comprises a plurality of nodes, including Start (S) 301, End (E) 302 and a number of identification features 311-314, i.e. identification factor challenges.

In principle, the access flow will be configured staring from the trivial flow S to E at the time of T1 with an edge (S,E). Following the structure progress script (in particular input degrees and output degrees of identification factors larger than 0 and prohibition of cycle), the identification factors can be added into the access flow step by step from the time T1 to the time T5, as illustrated in figure 5.

In an embodiment, an access flow engine can support the server devices in this process by ensuring that the structure progress script is followed, wherein the access flow engine can be an editor of "drag and drop" and comprises a number of further supporting functions supporting the generation of the access flow.

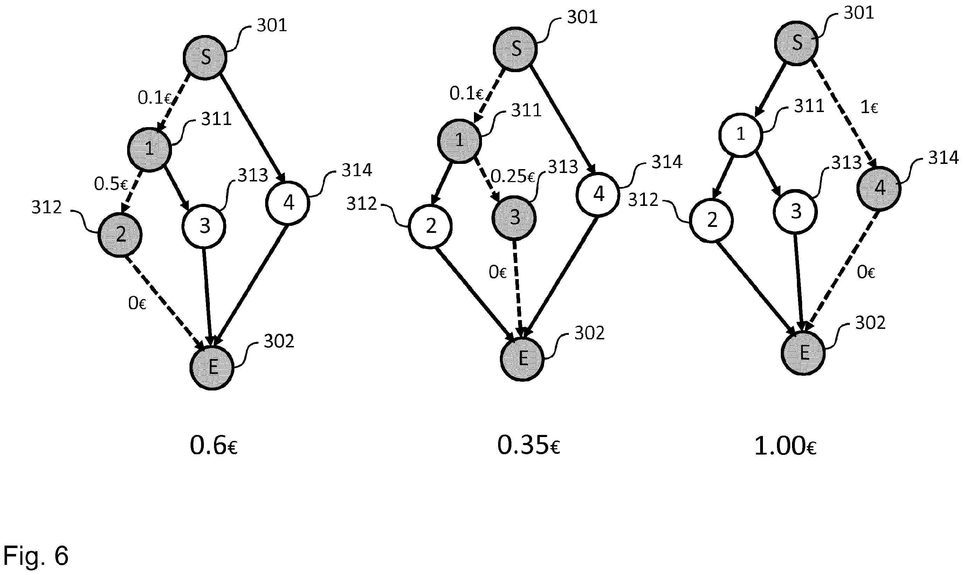

Figure 6 shows a schematic diagram illustrating evaluation of an identification flow, i.e. an access flow, by an electronic wallet device 101 according to an embodiment, wherein the identification flow comprises a plurality of nodes, including Start (S) 301, End (E) 302 and a number of identification features 311-314, i.e. identification factor challenges.
The electronic wallet device 101 can calculate the costs for all allowed authentication paths in the access flow by considering the identification factors (i.e. the verified identification features) already stored in the memory 107 of the electronic wallet device 101. Then the electronic wallet device 101 selects the most cost-effective path and the required identification features will be displayed to the user for approving.

If costs for two paths are the same or within the maximal difference range defined by the server device 131, the user can determine a path by himself. The missing identification features that are not stored in the memory 107 will be identified by the respective identification entities. After the approval of the user the identification features of the selected path can be transmitted to the electronic server device 131.

As discussed above, access flows can be statically generated by an electronic server device 131 and are the same for all users. However, it is also possible that an individual access flow can be generated dynamically at the time of request for each user according to an embodiment. This can be performed via algorithms from the field of artificial intelligence (e.g. neural networks) by an access flow engine according to an embodiment.

In an embodiment, an identification factor challenge (i.e. an identification feature) can also be an access flow by itself (nested architecture). There are two variants in which the access-flow identification factor challenge can be inserted in a parent access flow according to further embodiments.

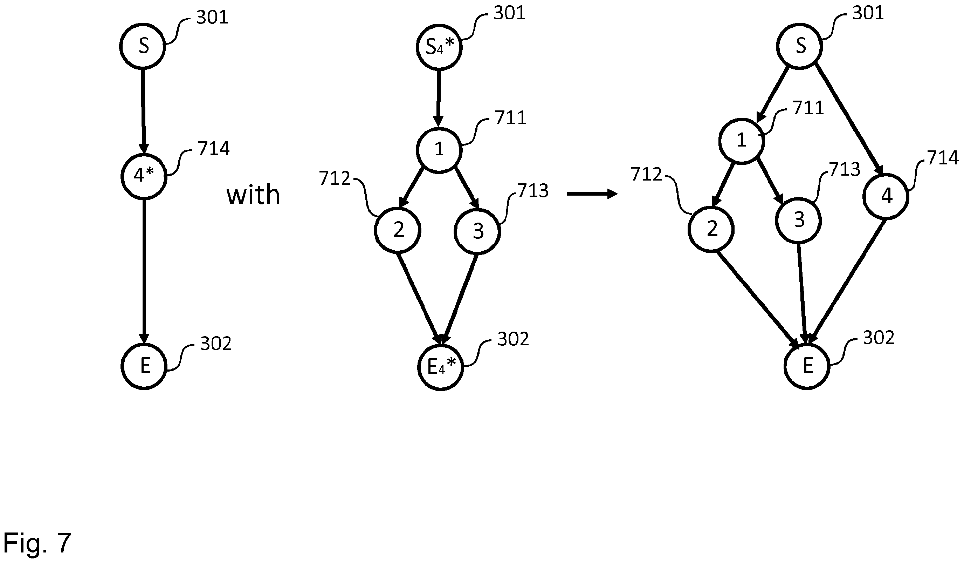

Figure 7 shows a schematic diagram illustrating a first variant in which an access-flow identification factor challenge can be inserted in a parent access flow (i.e. a parent identification flow) by an electronic server device 131 according to an embodiment.

As can be seen from figure 7, the access flow deposited by a single identification factor shows how to reach the identification factor. The complete access flow can then be created by inserting the nested access flow in parallel as an alternative to the actual identification factor challenges.

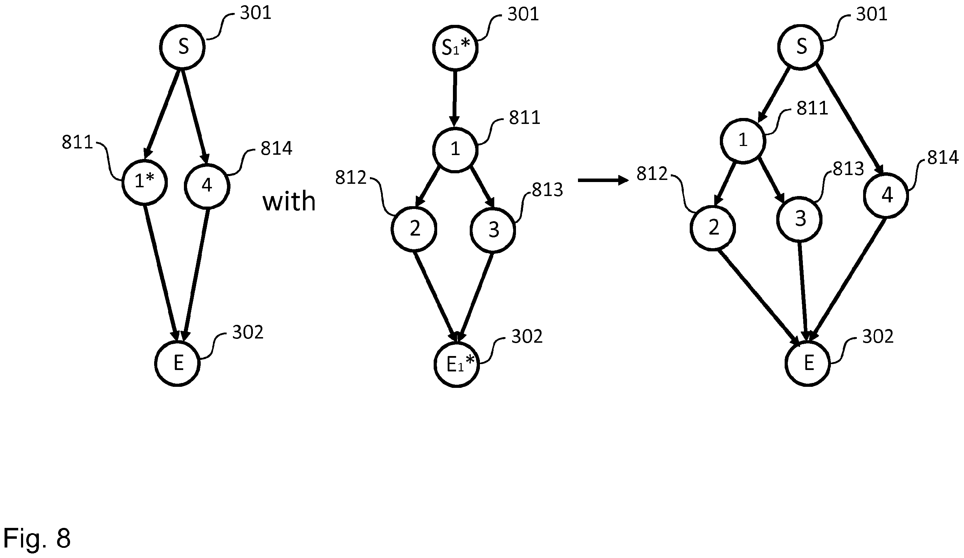

Figure 8 shows a schematic diagram illustrating a second variant in which an access-flow identification factor challenge can be inserted in a parent access flow (i.e. a parent identification flow) by an electronic server device 131 according to an embodiment.

As can be seen from figure 8, the identification factor challenge with deposited access flow represents a kind of placeholder. The complete access flow can then be created through direct and substitutive insertion of the nested access flow instead of the identification factor challenge.

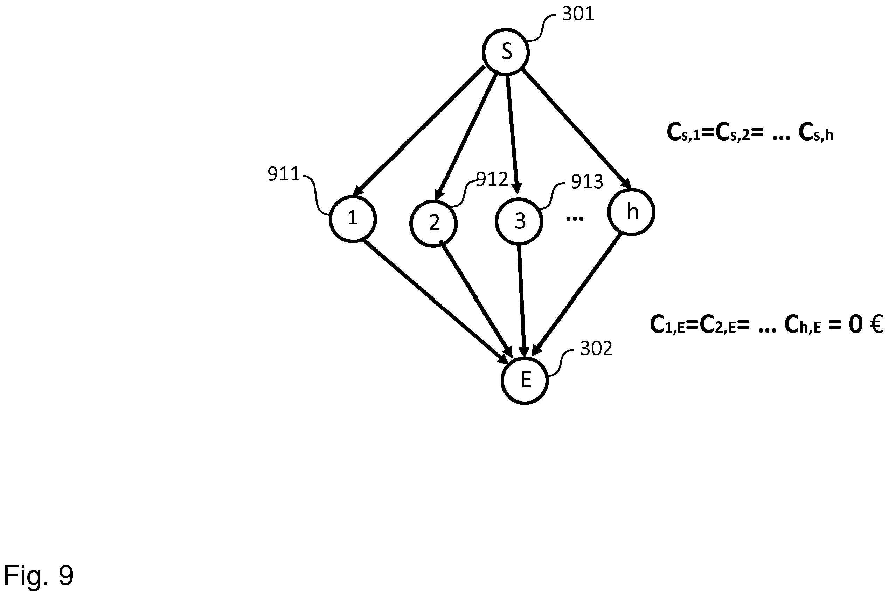

In an embodiment, an identification factor challenge can also be an equivalence class of identification factor challenges, where all identification factors in the class verify the same data set. It is to be expected that, but not a necessary condition, all identification factors of an equivalence class have an identical or common cost function, as shown in figure 9. An equivalence class can be interpreted in the context of a nested architecture as a separate (replacing) access flow.

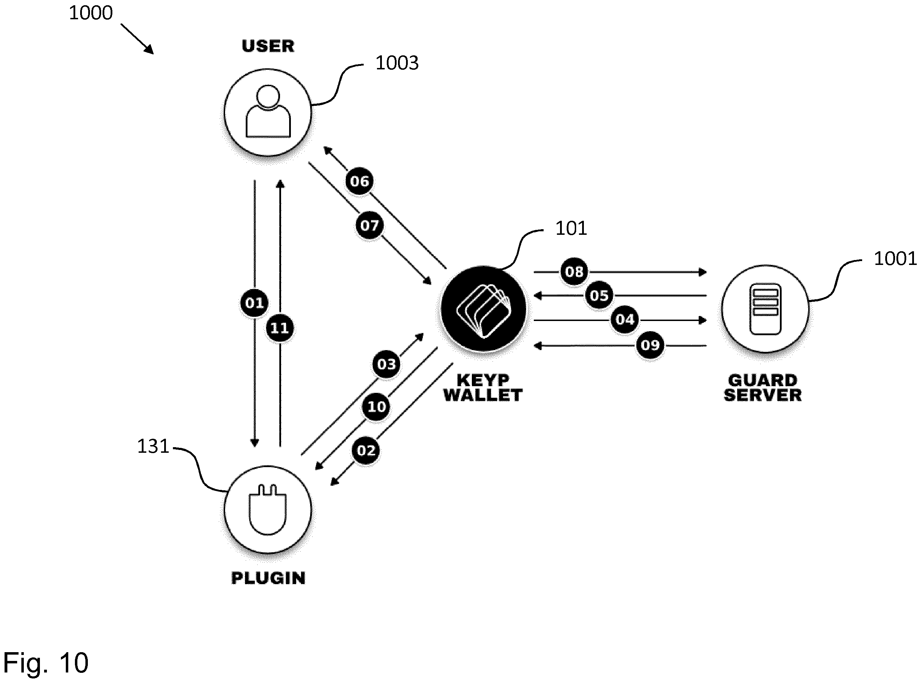

Figure 10 shows a schematic diagram illustrating an exemplary procedure 1000 of identifying and/or authenticating a user according to an embodiment, wherein a transaction with a workflow containing two simple identification factors, verified email and GPS location, is performed by an electronic user identification and/or authentication system, wherein the electronic user identification and/or authentication system comprises an electronic wallet device 101, an electronic server device 131 and an identification entity 1001 (hereafter also referred to as an authentication app server). The GPS location was configured during workflow creation with a center and a radius.

The procedure 1000 shown in figure 10 comprises the following steps:
A user 1003 starts the identification/authentication process (i.e. by scanning QR code) (step 01).
The electronic wallet device 101 requests the workflow configuration, i.e. an access flow or an identification flow, from the electronic service device 131 (step 02).
The electronic service device 131 returns the configuration (step 03).
The electronic wallet device 101 requests an authentication app widget (step 04).
The authentication app server 1001 (i.e. an identification entity or provider) returns a widget (step 05).
The electronic wallet device 101 requests identification features (e.g. email or location) from the user 1003 through the authentication app widget (step 06).

The user 1003 enters information / widget records it from sensors (step 07).
The electronic wallet device 101 sends identification features to authentication app server 1001 (step 08).
The authentication app server 1001 applies business logic, verifies identification features and returns the identity factors (step 09).
The electronic wallet device 101 stores and sends all requested factors to the electronic service device 131 (step 10).
The electronic service device 131 validates factors, authenticates the user 1003 and displays secured content to the user 1003 (step 11).

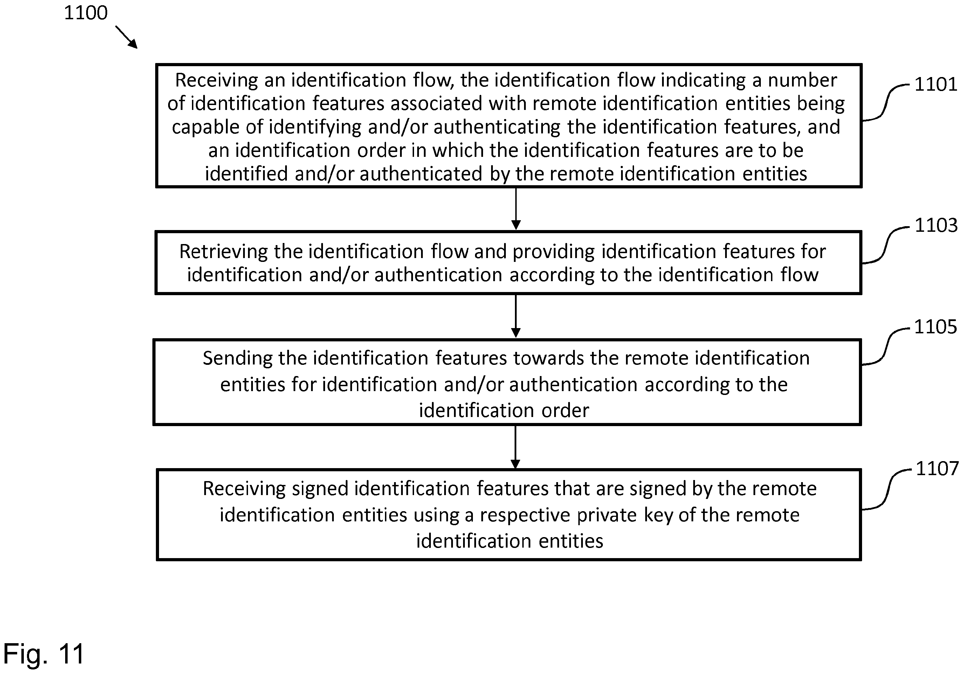

Figure 11 shows a schematic diagram illustrating a method 1100 for user identification and/or authentication according to an embodiment.

The method 1100 comprises the following steps: receiving 1101 an identification flow, the identification flow indicating a number of identification features associated with remote identification entities 1001 being capable of identifying and/or authenticating the identification features, and an identification order in which the identification features are to be identified and/or authenticated by the remote identification entities 1001; retrieving 1103 the identification flow and providing identification features for identification and/or authentication according to the identification flow; sending 1105 the identification features towards the remote identification entities 1001 for identification and/or authentication according to the identification order; and receiving 1107 signed identification features that are signed by the remote identification entities 1001 using a respective private key of the remote identification entities 1001.

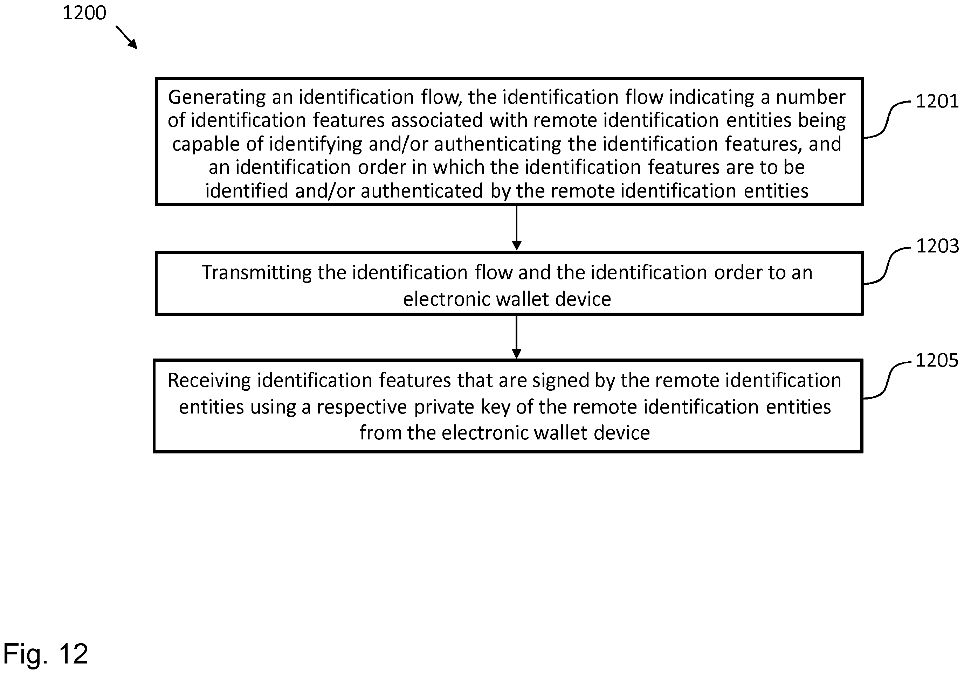

Figure 12 shows a schematic diagram illustrating a method 1200 for requesting user identification and/or authentication according to an embodiment.

The method 1200 comprises the following steps: generating 1201 an identification flow, the identification flow indicating a number of identification features associated with remote identification entities being capable of identifying and/or authenticating the identification features 1001, and an identification order in which the identification features are to be identified and/or authenticated by the remote identification entities 1001; transmitting 1203 the identification flow and the identification order to an electronic wallet device 101; and receiving 1205 identification features that are signed by the remote identification entities 1001 using a respective private key of the remote identification entities 1001 from the electronic wallet device 101.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.
Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. An electronic wallet device (101) for user identification and/or authentication, the electronic wallet device (101) comprising:
a communication interface (103) being configured to receive an identification flow from a remote server device (131), the identification flow indicating a number of identification features associated with remote identification entities (1001) being capable of identifying and/or authenticating the identification features, and an identification order in which the identification features are to be identified and/or authenticated by the remote identification entities (1001); and
a processor (105) being configured to retrieve the identification flow and to provide identification features for identification and/or authentication according to the identification flow;
wherein the communication interface (103) is configured to send the identification features towards the remote identification entities (1001) for identification and/or authentication according to the identification order and to receive signed identification features that are signed by the remote identification entities (1001) using a respective private key of the remote identification entities (1001).

2. The electronic wallet device (101) of claim 1, further comprising a memory (107) configured to store the signed identification features that are signed by the remote identification entities (1001).

3. The electronic wallet device (101) of claim 2, the identification flow comprising a plurality of identification orders, in each of which a respective subset of the identification features are to be identified and/or authenticated by respective remote identification entities (1001), wherein the processor (105) is configured to calculate a respective cost for identifying and/or authenticating the respective subset of the identification features by the remote identification entities (1001) according to each of the plurality of identification orders on the basis of signed identification features stored in the memory (107), and to determine the identification order by selecting the identification order which comprises the lowest cost from the plurality of identification orders.

4. The electronic wallet device (101) of claim 3, wherein the processor (105) is further configured to determine the respective cost for identifying and/or authenticating the respective subset of the identification features according to each of the plurality of identification orders on the basis of: the signed identification features stored in the memory (107); a cost associated with the use of the respective subset of the identification features by the remote server device (131); and/or a rule associated with identification and/or authentication of the respective subset of the identification features by the remote server device (131).

5. The electronic wallet device (101) of any one of claims 2 to 4, wherein the communication interface (103) is configured to capture and send the identification features that are not stored in the memory (107) towards the remote identification entities (1001) for identification and/or authentication according to the identification order and to receive signed identification features that are signed by the remote identification entities (1001) using respective private keys of the remote identification entities (1001).

6. The electronic wallet device (101) of any one of the preceding claims, wherein the communication interface (103) is configured to transmit the signed identification features to the remote server device (131), wherein the signed identification features have been signed by the remote identification entities (1001) according to the identification order.

7. The electronic wallet device (101) of any one of the preceding claims, wherein the communication interface (103) is configured to receive public keys associated with the respective private keys of the respective remote identification entities (1001) from the respective remote identification entities (1001) in order to verify the signed identification features, wherein the processor (105) is configured to verify the signed identification features on the basis of the public keys associated with the respective private keys of the respective remote identification entities (1001).

8. The electronic wallet device (101) of any one of the preceding claims, further comprising a graphical user interface configured to display a number of requests associated with the identification features according to the identification order to a user and to receive the identification features from the user in response to the respective request.

9. The electronic wallet device (101) of any one of the preceding claims, wherein the identification features comprise an email identification, a GPS location identification, a fingerprint identification, an address identification, a facial character identification, a phone number identification, a license identification, and/or a membership identification.

10. A method (1100) for user identification and/or authentication, comprising:
receiving (1101) an identification flow, the identification flow indicating a number of identification features associated with remote identification entities (1001) being capable of identifying and/or authenticating the identification features, and an identification order in which the identification features are to be identified and/or authenticated by the remote identification entities (1001);
retrieving (1103) the identification flow and providing identification features for identification and/or authentication according to the identification flow;
sending (1105) the identification features towards the remote identification entities (1001) for identification and/or authentication according to the identification order; and
receiving (1107) signed identification features that are signed by the remote identification entities (1001) using a respective private key of the remote identification entities (1001).

11. An electronic server device (131) for requesting user identification and/or authentication, wherein the electronic server device (131) comprises:
a processor (133) configured to generate an identification flow, the identification flow indicating a number of identification features associated with remote identification entities (1001) being capable of identifying and/or authenticating the identification features, and an identification order in which the identification features are to be identified and/or authenticated by the remote identification entities (1001); and
a communication interface (135) configured to transmit the identification flow and the identification order to an electronic wallet device (101), and to receive identification features that are signed by the remote identification entities (1001) using a respective private key of the remote identification entities (1001) from the electronic wallet device (101).

12. The electronic server device (131) of claim 11, wherein the processor (133) is configured to generate the identification flow by generating a plurality of identification orders, in each of which a respective subset of the identification features are to be identified and/or authenticated by respective remote identification entities (1001).

13. The electronic server device (131) of claim 11 or 12, wherein the communication interface (135) is configured to receive public keys associated with the respective private keys of the respective remote identification entities (1001) from the respective remote identification entities (1001), and wherein the processor is configured to verify the signed identification features received from the electronic wallet device (101) using the public keys received from the respective remote identification entities (1001).

14. The electronic server device (131) of any one of claims 11 to 13, wherein the electronic server device (131) further comprises a graphical user interface configured to display the identification flow and the plurality of identification orders, in each of which a respective subset of the identification features are to be identified and/or authenticated by respective remote identification entities (1001).

15. A method (1200) for requesting user identification and/or authentication, comprising:
generating (1201) an identification flow, the identification flow indicating a number of identification features associated with remote identification entities (1001) being capable of identifying and/or authenticating the identification features, and an identification order in which the identification features are to be identified and/or authenticated by the remote identification entities (1001);
transmitting (1203) the identification flow and the identification order to an electronic wallet device (101); and
receiving (1205) identification features that are signed by the remote identification entities (1001) using a respective private key of the remote identification entities (1001) from the electronic wallet device (101).

16. The method (1200) of claim 15, further comprising:
receiving public keys associated with the respective private keys of the respective remote identification entities (1001) from the respective remote identification entities (1001); and
verifying the signed identification features received from the electronic wallet device (101) using the public keys received from the respective remote identification entities (1001).

17. An electronic user identification and/or authentication system, comprising:
an electronic wallet device (101) according to any one of claims 1 to 9;
an electronic server device (131) according to any one of claim 11 to 14; and
remote identification entities (1001) configured to identify and/or authenticate identification features received from the electronic wallet device (101) and to sign the identification features using a respective private key.

18. A computer program comprising program code for performing the method (1100) according to claim 10 or the method (1200) according to any one of claim 15 to 16, when executed on a computer or a processor.
